# EUROPÄISCHE PATENTSCHRIFT

(11) **EP 3 475 248 B1**
(45) Veröffentlichungstag und Bekanntmachung des Hinweises auf die Patenterteilung: **05.08.2020**
(21) Anmeldenummer: 17731925.8
(22) Anmeldetag: 27.06.2017
(51) Int. Cl.: C05C 3/00

(54) **DIPEPTIDHALTIGE GRANULATE**
GRANULES CONTAINING DIPEPTIDE
GRANULES CONTENANT DU DIPEPTIDE

(30) Priorität: 27.06.2016 EP 16176371
(43) Veröffentlichungstag der Anmeldung: 01.05.2019
(73) Patentinhaber: Evonik Operations GmbH, 45128 Essen (DE)
(72) Erfinder: KÖRFER, Martin, 63796 Kahl (DE); HASSELBACH, Hans Joachim, 63571 Gelnhausen (DE); NIGGEMANN, Gerit, 60389 Frankfurt (DE); HANSMEIER, Antje, 2000 Antwerpen (BE); ALT, Hans Christian, 63571 Gelnhausen (DE); EGLY, Dominik, 64720 Michelstadt (DE); SCHULTE, Peter, 53909 Zülpich (DE)
(74) Vertreter: Evonik Patent Association
(86) Internationale Anmeldenummer: PCT/EP2017/065761
(87) Internationale Veröffentlichungsnummer: WO 2018/001988

(56) Entgegenhaltungen:
- EP-A2- 1 233 071
- MITCHELL C C ET AL: "Evaluation of a liquid potassium bicarbonate/amino acid co-product as a source of potassium, nitrogen, and sulfur", JOURNAL OF PLANT NUTRITION, MARCEL DEKKER, NEW YORK, NY, US, Bd. 17, Nr. 12, 1. November 1994 (1994-11-01), Seiten 2119-2134, XP008125142, ISSN: 0190-4167, DOI: 10.1080/01904169409364869

## Beschreibung

Die vorliegende Erfindung betrifft eine Methionin, Methionylmethionin, Kaliumsalz und Ammoniumsulfat enthaltende, partikelförmigen Zusammensetzung sowie deren Verwendung und ein Verfahren zu ihrer Herstellung.

Die Aminosäure Methionin wird gegenwärtig weltweit in großen Mengen industriell hergestellt und ist von beträchtlicher kommerzieller Wichtigkeit. Methionin wird auf vielen Gebieten angewendet, wie zum Beispiel für pharmazeutische, Gesundheits- und Fitnessprodukte, insbesondere jedoch als Futtermitteladditiv in vielen Futtermitteln für verschiedene Nutztiere. Im industriellen Maßstab wird Methionin chemisch über die Bucherer-Bergs-Reaktion hergestellt, die eine Variante der Strecker-Synthese darstellt. Dabei werden die Ausgangssubstanzen 3-Methylmercaptopropanal (hergestellt aus 2-Propenal und Methylmercaptan), Blausäure (Cyanwasserstoff), Ammoniak und Kohlendioxid zum 5-(2-Methylmercaptoethyl)-hydantoin (Methioninhydantoin) umgesetzt und dieses anschließend alkalisch mit Kaliumcarbonat und Kaliumhydrogencarbonat zum Kaliummethioninat hydrolysiert. Methionin wird schließlich durch Behandlung mit Kohlendioxid aus seinem Kaliumsalz freigesetzt, welches als Präzipitat aus der Kaliumcarbonat und Kaliumhydrogencarbonat enthaltenden Mutterlauge abfiltriert werden kann (US 5,770,769). Die Reagenzien Ammoniak, Kaliumcarbonat und Kaliumhydrogencarbonat sowie Kohlendioxid werden bei der industriellen Methioninproduktion in der Regel rezykliert. Von Zeit zu Zeit ist es aber erforderlich, die wässrige Mutterlauge dieses Hydantoinhydrolysekreislaufs teilweise gegen frisches Kaliumhydroxid auszutauschen, im Wesentlichen etwa um das in Form von neutralem Kaliumformiat inaktivierte Kaliumsalz aus dem Kreislauf zu entfernen ("Purge"). Kaliumformiat bildet sich aus den in der Methioninhydantoinlösung vorhandenen Resten an Blausäure und Kaliumsalzen aus der Hydantoinhydrolyse (WO2013030068A2). Ein weiteres Nebenprodukt der Methioninsynthese ist das Dipeptid Methionylmethionin (EP 1 564 208 A1). Generell muss die übermäßige Anreicherung von Nebenprodukten im Hydantoinhydrolysekreislauf vermieden werden, da ansonsten Störungen der Kristallbildung im Downstream auftreten.

Diese sogenannte Purge-Lösung enthält ungefähr 2 bis 6 Gew.% Methionin, 4 bis 8 Gew.% Methionylmethionin und 6 bis 14 Gew.% Kalium in Form von Kaliumsalzen. Wegen des Gehaltes an Kalium, Stickstoff und Schwefel eignet sich diese Lösung als Flüssigdünger (C.C. Mitchell und A.E. Hiltbold, Journal of Plant Nutrition, 17(12), 2119-2134, 1994). Wünschenswert wäre jedoch, einen derartigen Dünger in fester Form bereitzustellen. Versuche, diese Lösung zu einem festen, rieselfähigen Feststoffgemisch zu entwässern, um diesen Wertstoff lager- und transportfähiger zu machen, sind jedoch bisher fehlgeschlagen (vgl. Beispiel 6 in diesem Dokument).

Die der vorliegenden Erfindung zugrundeliegende Aufgabe ist demzufolge die Bereitstellung eines Feststoffdüngers auf Basis von Methionin und Kaliumsalzen sowie ein einfaches und kostengünstiges Verfahren zu seiner Herstellung, bei dem insbesondere auch die wässrige Mutterlauge des oben beschriebenen Hydantoinhydrolysekreislaufs als Wertstoff verwendbar ist.

Es wurde nun überraschenderweise gefunden, dass sich die o.g. Purge-Lösung durch gezielte Zugabe von Ammoniumsulfat gut zu einer rieselfähigen, lagerstabilen Feststoffzusammensetzung verarbeiten lässt.

Die genannte Aufgabe wird gelöst durch ein Verfahren zur Herstellung einer Methionin, Methionylmethionin, Kaliumsalz und Ammoniumsulfat enthaltenden, partikelförmigen Zusammensetzung, wobei das Verfahren die folgenden Schritte umfasst:
(a) Bereitstellung einer wässrigen Mischung, der Ausgangsmischung, enthaltend 0,5 bis 4 Gew.%, vorzugsweise 1 bis 3 Gew.% Methionin, 0,5 bis 5 Gew.%, vorzugsweise 1 bis 4 Gew.% Methionylmethionin, 1 bis 9 Gew.%, vorzugsweise 2 bis 7 Gew.% an Kalium in Form von Kaliumsalz und 7 bis 35 Gew.%, vorzugsweise 10 bis 30 Gew.% Ammoniumsulfat,
(b) Erzeugung von festen Partikeln aus der in Schritt (a) bereitgestellten wässrigen Mischung durch ein formgebendes Verfahren unter vorgeschaltetem und/oder gleichzeitigem Verdampfen des Wassers, und
(c) Trocknung der in Schritt (b) erhaltenen Partikel.
Das Verfahren ist einfach und kostengünstig in gängigen Apparaturen durchzuführen.

Eine solche wässrige Ausgangsmischung wie in Schritt a) kann erfindungsgemäß durch Vermischen einer wässrigen Lösung (i), enthaltend 30 bis 40 Gew.% Ammoniumsulfat mit einer wässrigen Lösung (ii), enthaltend 2 bis 6 Gew.%, vorzugsweise 3 bis 5 Gew.% Methionin, 4 bis 8 Gew.%, vorzugsweise 5 bis 7 Gew.% Methionylmethionin und 6 bis 14 Gew.%, vorzugsweise 8 bis 12 Gew.% Kalium in Form von Kaliumsalz in einem Verhältnis der wässrigen Lösung (ii) zur wässrigen Lösung (i) von 1,0/0,5 bis 1,0/3,0 hergestellt werden.

Als wässrige Lösung (ii) kann dabei vorteilhafterweise direkt die aus dem eingangs erwähnten durch Abtrennung von einer bei der Umsetzung von 5-(2-Methylmercaptoethyl)-hydantoin mit Kaliumcarbonat, Kaliumhydrogencarbonat und Kohlendioxid (Hydantoinhydrolysekreislauf bei der industriellen Methioninproduktion) unter Bildung von Methionin entstehenden wässrigen Mutterlauge verwendet werden, welche dadurch in umweltfreundlicher Weise einer sinnvollen Verwertung zugeführt wird.

Die Ammoniumsulfat enthaltende, wässrige Lösung (i) kann vorteilhafterweise direkt aus der für die großtechnische Methioninproduktion notwendigen Herstellung von Blausäure aus Methan und Ammoniak, etwa nach dem Andrussow- Verfahren (US 8,802,020 B2) oder dem BMA-Verfahren (F. Endter, Chemie-Ing.-Techn. 30, 1958, Nr. 5, 305-310), stammen und entsteht im Wesentlichen durch Behandeln eines dabei jeweils anfallenden Blausäure und Ammoniak enthaltenden Gasgemisches mit Schwefelsäure (Schwefelsäure-Wäsche) und anschließender Neutralisation der erhaltenen wässrigen Lösung mit Ammoniak. Diese Lösung wird dadurch gleichzeitig in umweltfreundlicher Weise einer sinnvollen Verwertung zugeführt.
Auf diese Weise werden gleich zwei zusätzlich anfallende Wertstoffströme der industriellen Methioninproduktion ohne die Notwendigkeit von weiteren Additiven in ein neues vorteilhaftes Produkt überführt.

Beim Kaliumsalz kann es sich sowohl um ein Salz oder mehrere Salze von anorganischen als auch von organischen Säuren handeln, beispielsweise um mindestens ein Kaliumsalz ausgewählt aus der Gruppe umfassend Ameisensäure, Essigsäure, Propansäure, 2-Hydroxypropansäure, 2-Hydroxy-4-methylthiobutansäure aber auch Methionin und Methionylmethionin bei entsprechendem pH-Wert, Kaliumhydrogencarbonat, Kaliumcarbonat, Kaliumhydrogensulfat und Kaliumsulfat.

Die wässrige Ausgangsmischung in Schritt (a) wird bevorzugt vor deren weiteren Behandlung in Schritt (b) in vorteilhafter Weise bis zum Erreichen eines pH-Werts von 3 bis 6, besonders bevorzugt von 3,5 bis 5,5 in der wässrigen Mischung (bei Raumtemperatur gemessen mit einer Glas-pH-Elektrode mit Flüssig-Elektrolyt (3-molare KCl Lösung)-Füllung) mit Schwefelsäure versetzt.

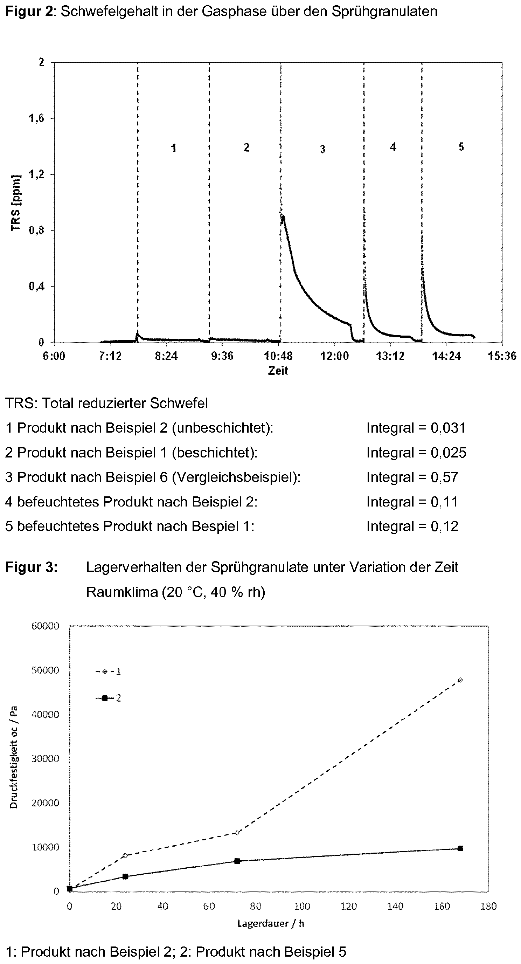

Bei der Herstellung der Ausgangslösung etwa aus den Lösungen (i) und (ii) entsteht aus Ammoniumsulfat und Kaliumcarbonat teilweise Ammoniumcarbonat, welches beim Erhitzen zu Ammoniak und Kohlendioxid zerfällt und in Form dieser Gase entweicht. Durch Zugabe von Schwefelsäure wird die Freisetzung von Ammoniak größtenteils verhindert und dieser wieder in Form von Ammoniumsulfat gebunden, wobei im Wesentlichen lediglich Kohlendioxid entweicht. Die Einstellung des pH-Werts auf 3 bis 6 bewirkt ferner eine Verbesserung der Lagerstabilität der in Schritt (c) des erfindungsgemäßen Verfahrens erhaltenen Partikel, wie auch aus der Ergebnisdarstellung in Tabelle 3 und der Figur 3 hervorgeht.

Bei einer vorteilhaften Ausgestaltung des erfindungsgemäßen Verfahrens wird die in Schritt (a) bereitgestellte wässrige Mischung vor Schritt (b) durch Verdampfen des Wassers zu einer wässrigen Suspension mit bis zu 70 Gew.% Feststoffgehalt aufkonzentriert. Durch das Aufkonzentrieren werden Energiekosten in Schritt (b) des erfindungsgemäßen Verfahrens gespart. Die erhaltene Suspension kann vor Schritt (b) noch einer Homogenisierung, beispielsweise mittels eines Leitstrahl-Mischers und einer Hochleistungs-Dispergiermaschine, unterworfen werden.

Die Erzeugung von Feststoffpartikeln aus der wässrigen Ausgangsmischung unter gleichzeitigem Verdampfen des Wassers gemäß Schritt (b) erfolgt vorteilhafterweise mit den formgebenden Verfahren der Extrusion, Mischgranulation, Kompaktierung oder der Sprühgranulation. Das erfindungsgemäße Verfahren kann sowohl im diskontinuierlichen als auch im kontinuierlichen Verfahren durchgeführt werden, beispielsweise in einem Extruder, Wirbelschicht- bzw. Fließbettgranulator oder Mischgranulator.

Eine bevorzugte Methode für die Durchführung von Schritt (b) des Verfahrens gemäß der vorliegenden Erfindung ist die Sprühgranulation. Dabei eignen sich insbesondere Luft und Stickstoff als Gaskomponente, die z.B. über eine Zweistoffdüse zusammen mit der wässrigen Ausgangsmischung als Flüssigkomponente eingebracht wird. Die Sprühgranulation wird dabei vorzugsweise in einer Wirbelschicht durchgeführt, wahlweise nach dem Bottom-Spray oder Top-Sprayverfahren. Ein solches Verfahren ermöglicht die Bildung besonders gleichförmiger Teilchen der erfindungsgemäßen, partikelförmigen Zusammensetzung mit relativ enger Korngrößenverteilung. Die im Austrag zu erzielende Korngröße ist dabei von der Keimbilanz in der Wirbelschichtanlage abhängig. Diese wird wesentlich vom Gleichgewicht von Keimbildung durch Abrieb oder nicht treffende Sprühtropfen und dem Granulataufbau bestimmt. Gezielt kann die Korngröße durch die Wahl der Trocknungs- und der Sprühparameter sowie durch den Einsatz eines Zerhackers eingestellt werden. Die so erzeugten Granulate können durch eine klassierende Einrichtung (z.B. Sichter, Unterlaufwehr) in angestrebter Partikelgröße kontinuierlich aus dem Trocknungsraum ausgetragen werden. Die Partikelgröße des Produktes kann durch eine nachgeschaltete Siebung noch enger eingestellt werden. Das Überkorn der Siebung wird über eine Mühle zerkleinert und gemeinsam mit dem mittels Zyklon abgetrennten Feinkorn zurückgeführt (z.B. pneumatisch oder mittels Förderschnecke). Dies hat den Zweck, dass ausreichend Keime für die Granulation im Prozessraum vorhanden sind und kein Produkt verloren geht.

Die Sprühgranulation wird bei einer Temperatur in der Wirbelschicht von 60 bis 130°C, vorzugsweise von 80 bis 110° durchgeführt. Der Druck hat auf den Prozess nur wenig Einfluss. Üblicherweise wird mit einem leichten Unterdruck von 5 bis 50 mbar, vorzugsweise von ca. 10 mbar gearbeitet, um den Austritt von Staub aus der Anlage zu vermeiden.

Die Sprühgranulation wird ferner bevorzugt über eine oder mehrere Düsen mit 1,0 bis 8,0 mm Düsendurchmesser, bei Düsendrucken von 1 bis 5,0 barü, idealerweise von 2,0 bis 3,0 barü durchgeführt. Die Sprühraten der eingesetzten Mischung sind in Abhängigkeit von der Anlagengröße zu wählen.
Als Düsentyp eignet sich insbesondere eine Zweistoffdüse (pneumatischer Zerstäuber), vorzugsweise mit kreisförmigem Vollkegel als Zerstäuberform (z.B. von Fa. Schlick). Bei Verwendung der Zweistoffdüse wird die Gaskomponente zusammen mit der wässrigen Ausgangsmischung aus Schritt a) als Flüssigkomponente über die Düse gesprüht.

Auf die in Schritt (b) des erfindungsgemäßen Verfahrens erhaltenen Partikel kann ferner durch Besprühen mit einer wässrigen Lösung, enthaltend 30 bis 40 Gew.% Ammoniumsulfat unter gleichzeitigem Verdampfen des Wassers eine Ammoniumsulfat-Hüllschicht aufgebracht werden, wobei der Anteil der auf den Partikeln so gebildeten Ammoniumsulfat-Hüllschicht 5 bis 30 Gew.% bezogen auf den Gesamtfeststoffgehalt der Partikel beträgt. Der Vorteil dabei liegt vor allem darin, dass die Hüllschicht zusätzlich unangenehme Geruchskomponenten einschließt und auf diese Weise ein fast geruchsneutrales Produkt erzeugt wird. Die zum Besprühen einzusetzende wässrige Ammoniumsulfatlösung kann identisch zur vorstehend erwähnten Lösung (i) sein, d.h. beispielsweise auch aus der Blausäureproduktion stammen.

Im kleineren Maßstab wird dabei die diskontinuierliche Fahrweise bevorzugt, d.h. die Beschichtung erfolgt nach dem Granulationsprozess. Im großtechnischen Produktionsmaßstab wird die kontinuierliche Fahrweise bevorzugt. Der Granulator wird dazu vorzugsweise in mehrere Zonen unterteilt. Die ersten Zonen werden für den Granulationsschritt (b) verwendet. Anschließend folgen eine Beschichtungs-Zone, eine Nachtrocknungszone und eine Kühlungszone zur entsprechenden Weiterverarbeitung des primär gebildeten Granulates. Die Nachtrocknung und die Kühlung können auch in separaten Anlagen (z.B. Fließbetttrockner, -kühler mit integrierten Heiz- bzw. Kühlregistern) erfolgen. Als Granulatoren eignen sich übliche Wirbelschicht- bzw. Fließbettanlagen.

Ein weiterer Gegenstand der vorliegenden Erfindung ist eine partikelförmige Zusammensetzung, enthaltend als Bestandteile 1,5 bis 10 Gew.%, vorzugsweise 2 bis 8 Gew.% Methionin, 2,5 bis 9 Gew.%, vorzugsweise 3 bis 7 Gew.% Methionylmethionin, 4 bis 20 Gew.%, vorzugsweise 5 bis 17 Gew.% Kalium in Form von Kaliumsalz und 27 bis 80 Gew.%, vorzugsweise 30 bis 76 Gew.% Ammoniumsulfat. Die Gesamtheit der Gewichtsanteile aller Bestandteile einschließlich der ggf. vorhandenen Anteile weiterer untergeordneter Komponenten inklusive der Restfeuchte von typischerweise bis ca. 1 Gew.% ergänzen sich dabei zu 100 Gew.%. Diese partikelförmige Zusammensetzung kann mit dem vorbeschriebenen, erfindungsgemäßen Verfahren hergestellt werden.
Die erfindungsgemäße, partikelförmige Zusammensetzung eignet sich zur Verwendung als Düngemittel oder Düngemittelzusatz, insbesondere als Stickstoff-/Kalium-/Schwefel (NKS)-Dünger zur Ausbringung auf Anbauflächen für Nutzpflanzen. Sie hat im Vergleich zur bisher als Flüssigdünger verwendeten Purge-Lösung eine deutlich höhere Wirkstoffkonzentration sowie bessere Lagereigenschaften und Produktstabilität. Das Produkt ist auch sicherheitstechnisch unbedenklich. Es ist z.B. kein Staub-Ex-Produkt. Die Notwendigkeit von Flüssigkeitstransport und - lagerung in entsprechenden Tanks oder Tankfahrzeugen entfällt außerdem. Das Produkt kann auch in kleineren Gebinden z.B. als Sackware oder in Big Bags an Kunden geliefert werden.

Die erfindungsgemäße partikelförmige Zusammensetzung hat eine durchschnittliche Partikelgröße von ca. 1 bis 4 mm. Dies hat den Vorteil insbesondere gegenüber größeren Partikeln, dass sie auf den Anbauflächen relativ gleichmäßig verteilbar ist und somit eine Über- bzw. Unterdosierung vermieden werden kann.

Ein weiteres Kennzeichen der erfindungsgemäßen Düngemittelzusammensetzung gegenüber einigen bekannten organisch-/mineralischen Düngemittelzusammensetzungen ist, dass sie bevorzugt im Wesentlichen harnstofffrei und besonders bevorzugt völlig frei von Harnstoff ist. Der organische Stickstoffanteil wird dabei hauptsächlich durch den Anteil an Methionin und Methionylmethionin bereitgestellt. Damit werden zum einen harnstoff-bedingte Materialkosten eingespart und zum anderen wird zusätzlich organischer Schwefel bereitgestellt. Unter im wesentlichen harnstofffreier partikelförmiger Zusammensetzung ist hierbei eine partikelförmige Zusammensetzung zu verstehen mit < 1 Gew.%, Harnstoff.

Sehr günstig ist es auch, dass neben Methionin auch Met-Met zum organischen (N+S)-Gehalt beiträgt, da der organische (N+S)-Gehalt dadurch um ca. 6,4 % höher ist im Vergleich zur gewichtsäquivalenten Met-Menge [Faktor = 2^{∗}Molgewicht (Met)/Molgewicht (Met-Met)].

Beim Kaliumsalz kann es sich sowohl um ein Salz oder mehrere Salze von anorganischen als auch von organischen Säuren handeln, beispielsweise die Kaliumsalze ausgewählt aus der Gruppe umfassend Ameisensäure, Essigsäure, Propansäure, 2-Hydroxypropansäure, 2-Hydroxy-4-methylthiobutansäure aber auch von Methionin und Methionylmethionin bei entsprechendem pH-Wert, Kaliumhydrogencarbonat, Kaliumcarbonat, Kaliumhydrogensulfat und Kaliumsulfat. Diese Kaliumsalze haben den Vorteil, dass auch die Säurereste einen eigenen Beitrag zur Düngewirkung liefern.
Vorteilhafterweise können der Zusammensetzung weitere Kaliumsalze beigemischt werden, beispielsweise Phosphate, was bei einer Anwendung als Düngemittel zusätzlichen Nutzen bringen kann, weil man auf diese Weise sogar einen Stickstoff-/Phosphor-/Kalium-/Schwefel (NPKS)-Dünger erhält.

In einer weiteren vorteilhaften Ausführungsform sind die Partikel der erfindungsgemäßen Zusammensetzung mit einer Ammoniumsulfat-Schicht umhüllt, die wahlweise zusätzlich NH₄HSO₄ enthält, wobei der Anteil der auf den Partikeln gebildeten Ammoniumsulfat-Schicht 5 bis 30 Gew.%, vorzugsweise 10 bis 25 Gew.% und besonders bevorzugt 10 bis 20 Gew.% bezogen auf den Gesamtfeststoffgehalt der Partikel beträgt.
Die optionale Ammoniumsulfat-Schicht trägt erheblich zur weitgehenden Vermeidung der bei schwefelhaltigen Düngemitteln üblicherweise auftretenden unangenehmen Gerüche bei. Außerdem werden hierdurch z.T. vorhandene hygroskopische Eigenschaften der Partikel deutlich reduziert. Ein zusätzlicher Vorteil liegt darin, dass die Hüllschicht selbst aus einer aktiven Düngemittelkomponente besteht und damit gleichzeitig zum Wirkstoffgehalt der als Düngemittel verwendbaren Partikel beiträgt.

Da bereits der Gehalt der erfindungsgemäßen Zusammensetzung an Ammoniumsulfat das Verklumpen der Partikel verhindert, ist die Beimengung eines Bindemittels bzw. Fließhilfsmittels in der Regel überflüssig. Sofern dennoch ein Bindemittel bzw. Fließhilfsmittel für die Herstellung der erfindungsgemäßen Düngemittelzusammensetzungen eingesetzt werden soll, wird dieses zweckmäßigerweise im Falle der diskontinuierlichen Fahrweise eines Wirbelschichtgranulators durch Mischen des Bindemittels bzw. Fließhilfsmittels mit dem Startmaterial in die Wirbelschicht eingebracht. Als Startmaterial (Trägermaterial) eignet sich insbesondere der Rückstand der eingedampften Lösung (ii) bzw. der Mutterlauge aus dem eingangs beschriebenen Hydantoinhydrolysekreislauf, welcher vorher z.B. mit einer Siebmühle auf eine geeignete mittlere Korngröße von z.B. d50 = 150 µm zerkleinert wurde. Alternativ kann auch Methionin-Pulver (z.B. mit Korngröße d50 = 180 µm) oder Ekoperl - ein Ölbindemittel aus porösem vulkanischem Silikatgestein (Perlit) z.B. in der Körnung 0,125 bis 2 mm - als Startmaterial eingesetzt werden.

Als Bindemittel eignet sich z.B. poröses vulkanisches Silikatgestein (z.B. Perlit), gefällte oder pyrogene Kieselsäure oder poröses Karbonatgestein.

Im Falle der kontinuierlichen Fahrweise z.B. eines Produktionsverfahrens geschieht das Zumischen des Bindemittels bzw. Fließhilfsmittels zweckmäßigerweise mittels Injektor, Saugtaktförderung, pneumatischer Förderung, Zellenradschleuse, Rühr-Vorlagebehälter oder Förderschnecke.

### Beispiele

### Geeignete Apparatur und allgemeine Beschreibung der Durchführung des Verfahrens

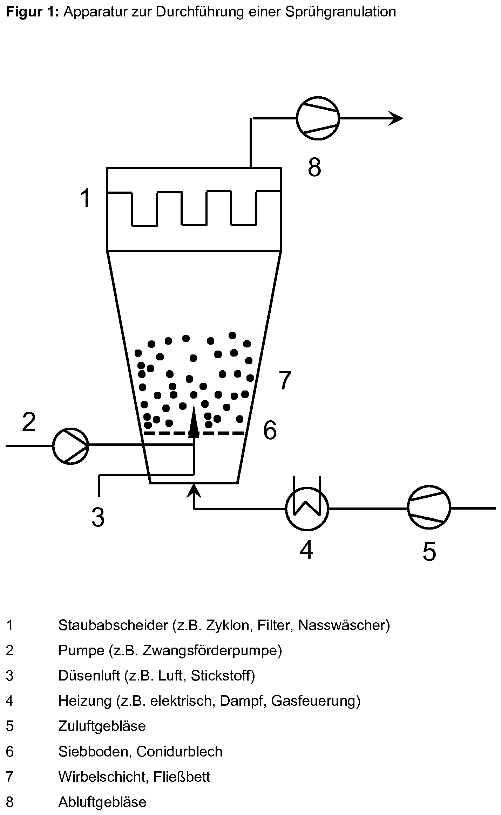

Die Sprühgranulationen wurden mithilfe einer Wirbelschichtanlage durchgeführt. In Figur 1 ist der prinzipielle Aufbau einer Wirbelschichtanlage schematisch dargestellt. Der Prozessraum (Wirbelkammer) besteht aus einem konischen Behälter mit Siebboden (hier Durchmesser = 150 mm, Maschenweite = 100 µm). In der Mitte des Siebbodens befindet sich eine Zweistoffdüse (hier Düsendurchmesser = 1,2 mm) mit zwei Einlassstutzen. Über einen Stutzen wird die Feststoff-/Flüssigkeitsmischung mittels einer Pumpe (z.B. Schlauchpumpe) zudosiert. Über den zweiten Stutzen wird Druckluft aufgegeben, um die Flüssigkeit in den Prozessraum fein zu verteilen und auf das dort vorhandene Wirbelbett (aufgewirbelter Feststoff) zu sprühen. Gleichzeitig wird heiße Luft (oder Stickstoff) von unten nach oben in den Apparat strömen lassen, um erstens das vorhandene Material zu fluidisieren und zweitens die versprühte Flüssigkeit zu verdampfen. Der versprühte Feststoff bleibt idealerweise auf den vorhandenen Partikeln haften, wodurch sich ein diskretes Partikelwachstum einstellen lässt. Die im Austrag zu erzielende Korngröße ist von der Keimbilanz in der Wirbelschichtanlage abhängig. Diese wird wesentlich vom Gleichgewicht von Keimbildung durch Abrieb oder nicht treffende Sprühtropfen und dem Granulataufbau bestimmt. Gezielt kann die Korngröße durch die Wahl der Trocknungs-, der Sprühparameter und durch den Einsatz eines Zerhackers in der Wirbelschicht eingestellt werden. Die so erzeugten Granulate können durch eine klassierende Einrichtungen (z.B. Sichter und Unterlaufwehr) in angestrebter Partikelgröße kontinuierlich aus dem Trocknungsraum ausgetragen werden.

Die für die Trocknung und Fluidisierung benötigte Luft wird mit einem Gebläse angesaugt und über einen Lufterhitzer (z.B. elektrisch, Gas- oder Dampfbeheizung) auf die gewünschte Zulufttemperatur erwärmt. Durch das Abluftgebläse wird der Druck in der Anlage reguliert. Aufgrund des größer werdenden Durchmessers der Wirbelkammer nimmt die Geschwindigkeit des Gases über der Anlagenhöhe ab, wodurch der Austrag von feinen Partikeln aus der Anlage reduziert wird. Ausgetragene Partikel werden über einen Staubabscheider (z.B. 6 Patronenfilter) in die Anlage zurückgeführt, indem diese pneumatisch mit Druckluft von den Filterelementen gelöst werden. Alternativ zu einem Filterabscheider kann auch ein Zyklon oder die Kombination Zyklon/Filter und Nasswäscher eingesetzt werden.

Als Trägermaterial (Startfüllung) diente der getrocknete Rückstand der vorstehend genannten Lösung (ii) bzw. der Mutterlauge aus dem eingangs beschriebenen Hydantoinhydrolysekreislauf, welcher vorher mit einer Siebmühle (z.B. Maschenweite = 150 µm) zerkleinert wurde. Alternativ kann auch Methionin-Pulver (Korngröße d50 = 180 µm) oder Ekoperl - ein Ölbindemittel aus porösem vulkanischem Silikatgestein (Perlit) in der Körnung von z.B. 0,125 bis 2 mm - als Startmaterial eingesetzt werden.

Die zu versprühende Suspension war eine Mischung aus der vorstehend genannten, eingedampften Lösung (ii) bzw. der Mutterlauge aus dem eingangs beschriebenen Hydantoinhydrolysekreislauf (ca. 40 Gew.% Trockenmasse) und einer Ammoniumsulfatlösung (Lösung (i) mit ca. 30 bis 40 Gew.% Trockenmasse), welche mithilfe eines Rührers homogenisiert wurde.

Für die Beispiele wurden mehrere Sprühgranulationsversuche mit unterschiedlichen Mischungsverhältnissen (Lösung (ii) : Lösung (i) von 1:2, 1:1; 1 :0,8 und 1:0,6) in der vorstehend beschriebenen Apparatur durchgeführt.

| | |
|---|---|
| Wässrige Lösung (i): | 35 Gew.% Ammoniumsulfat |
| Wässrige Lösung (ii) | 4,6 Gew.% Methionin |
| | 6,3 Gew.% Methionylmethionin |
| | 9,7 Gew.% Kalium |

Um ein Zusetzen der Sprühdüse durch grobe Feststoffteilchen zu vermeiden, wurde die eingesetzte Lösung bzw. Suspension mit einem Hochleistungs-Dispergiergerät (z.B.ULTRA-TURRAX®) für 5 min bei ca. 10.000 U/min dispergiert. Anschließend wurde die Lösung/Suspension in einem Verdampfer (z.B. Labor-Rotationsverdampfer) von einem Feststoffgehalt von ca. 30 bis 40 Gew.% auf eine Konzentration von ca. 60 bis 70 Gew.% eingedampft.

Die Beispiele wurden in der oben beschriebenen Apparatur gemäß Figur 1 in kontinuierlicher Fahrweise durchgeführt. Dabei wurden die folgenden Versuchsparameter eingestellt.

### Eingestellte Parameter bei der Wirbelschicht-Sprühgranulation:

T Zuluft = 100 - 200°C
T Wirbelbett = 60 - 110°C
T Abluft = 60 - 130°C
Sprührate = 0,3-3 kg/h
Düsendruck (Zweistoffdüse) = 1,2 bar
Volumenstrom Trocknungsluft = 40 - 200 m³/h. Dies entspricht einer Anströmgeschwindigkeit von 0,6 - 3,1 m/s bei der gegebenen Anströmfläche (0,018 m²)
Anlagendruck oberhalb des Siebbodens = 10 mbar unterhalb Atmosphärendruck
Mittlere Verweilzeit: 0,5 - 1 h.

Kontinuierlicher Betrieb mit Austrag über einen Zick-Zack-Sichter.

### Eingestellte Parameter bei der Beschichtung der Partikel:

Zweistoffdüse,
Düsendruck: 1,2 bar
Sprührate: 0,3 - 3 kg/h
P = 10 mbar unterhalb Atmosphärendruck
T Zuluft = 100 - 200°C
T Bett = 60 - 110°C
Mittlere Verweilzeit: 0,5 - 1 h

### Batch- Betrieb

**Tabelle 1: Übersicht Granulationsversuche**

| **Beispiel Nr.** | **Mischungsverhältnis Lösung (ii) /Lösung (i)** | **Bindemittel** | **Beschichtung [Gew.%]** bezogen auf den Gesamtfeststoffgehalt der Partikel |
|---|---|---|---|
| **1** | 1:1 | - | 10 Gew.% Ammoniumsulfat |
| **2** | 1:0,8 | - | unbeschichtet |
| **3** | 1:0,6 | - | unbeschichtet |
| **4** | 1:0,6 | Vulkangestein, Perlit, (ca. 30 Gew.%) | unbeschichtet |
| **5*)** | 1:2 | - | unbeschichtet |
| **6** | 1:0, nur Lösung (ii) | - | unbeschichtet |

| | | | |
|---|---|---|---|
| *) In Beispiel 5 wurde der pH der Ausgangsmischung (hergestellt aus den Lösungen (i) und (ii)) mittels Schwefelsäure auf den Wert 6 eingestellt. | | | |

### Beispiele 1 bis 5:

Die den Bedingungen der Sprühgranulation unterworfenen Mischungen gemäß den Beispielen 1 bis 5 ließen sich zu partikelförmigen Zusammensetzungen mit Partikeldurchmessern von 1 - 4 mm granulieren. Die Zusammensetzungen zeigten jeweils eine geringe Staubneigung, eine gute bis sehr gute Rieselfähigkeit (über Scherversuche im Labor nachgewiesen; vgl. Tabelle 3) sowie gute Produktstabilitäten (über Lagerversuche im Labor nachgewiesen; vgl. Tabelle 3). Die Granulate wiesen jeweils eine besonders geringe Verklumpungsneigung auf, insbesondere wenn der pH-Wert der Ausgangsmischung mittels Schwefelsäure abgesenkt wurde oder wenn die erzeugten Partikel zusätzlich mit Lösung (i) (Ammoniumsulfatlösung) beschichtet wurden (Beispiel 1). Die Schüttgewichte der erzeugten Granulate lagen zwischen 700 - 800 kg/m³.

Das Produkt nach Beispiel 1 wurde im Batch-Verfahren beschichtet. Die Konzentration der Ammoniumsulfat-Schicht kann aus einer Massenbilanz ermittelt werden unter der Annahme, dass eine gleichmäßige Benetzung der Granulate gewährleistet ist und beim Versprühen keine Verluste auftreten. Die Menge an versprühtem Ammoniumsulfat abzüglich des Wassers entspricht dem Massenanteil der Ammoniumsulfat-Beschichtung bezogen auf das Gesamtgewicht des Endproduktes.

### Beispiel 6 (Vergleichsbeispiel):

Die den Bedingungen der Sprühgranulation unterworfene Lösung (ii) ließ sich nicht granulieren, sondern bildete eine klebrige Masse.

### Gefundene Produkteigenschaften (vgl. Tabelle 2):

**Tabelle 2: Produkteigenschaften der erhaltenen Granulate**

| **Versuch Nr.** | **SG [kg/l]** | **Durchmesser (mm)** | **Staubneigung** | **Rieselfähigkeit** | **Verklumpungsneigung** | **Zusammensetzung [Gew.%] (Met / Met-Met / K / (NH₄)₂SO₄)** |
|---|---|---|---|---|---|---|
| 1 | 0,75 | 1 - 2 | gering | gut | gering | 5,2 / 4,4 / 11,7 / 45,6 |
| 2 | 0,75 | 1 - 2 | gering | gut | gering | 5,5 / 4,6 / 12,2 / 42,8 |
| 3 | 0,75 | 1 - 4 | gering | gut | gering | 6,5 / 5,5 / 14,6 / 34,2 |
| 4 | 0,75 | 1 - 4 | hoch | mittel | gering | Nicht untersucht |
| 5 | 0,75 | 1 - 4 | gering | sehr gut | gering | 4,5 / 4,7 / 10,4 / 53,0 |
| 6 | n.a. | n.a. | n.a. | schlecht | hoch | Nicht untersucht |

| | | | | | | |
|---|---|---|---|---|---|---|
| SG: Schüttgewicht, n.a.: nicht anwendbar | | | | | | |

### Lagerstabilität:

Mit Ausnahme des Produkts gemäß Beispiel 4, welches ein Bindemittel enthielt, waren die Produkte gemäß den Beispielen 1 bis 3 und 5 staubfrei und blieben auch nach mehreren Monaten an normaler Umgebungsluft fest und trocken. Lediglich eine gewisse Zeitverfestigung und eine moderate Empfindlichkeit gegenüber erhöhter Luftfeuchte waren festzustellen, welche jedoch die praktische Verwendung des Produkts nicht nennenswert beschränkte. Die Zeitverfestigung ist aber bei dem unter Schwefelsäure-Zugabe hergestellten Granulat (Beispiel 5) im Vergleich zu den ohne Schwefelsäure-Zugabe hergestellten Granulaten (Beispiele 2 und 3) zum Teil sogar erheblich niedriger. Daher ist es möglich, die leichten Verfestigungen durch einfache mechanische Beanspruchung (z.B. Walken, Aufstoßen von Säcken) wieder aufzubrechen.

### Bewertung des Geruchs:

Um eine Aussage über die Freisetzung unangenehmer Gerüche des granulierten Produktes zu treffen, wurden folgende Labortests durchgeführt:
Die Proben wurden dafür in ein U-Rohr gegeben und mit Luft überströmt. In der Abluft hinter dem U-Rohr wurde der Gehalt an Schwefelverbindungen, welche hauptsächlich für den unangenehmen Geruch verantwortlich sind, mittels eines UV-Fluoreszenz-Schwefel-Analysators (z.B. Fabrikat Horiba) bestimmt. Die Ergebnisse sind in Figur 2 gezeigt. Über das im gleichen Zeitintervall berechnete Integral der jeweiligen Kurve konnte eine Aussage über die Konzentration der freigesetzten Schwefelkomponenten in der Abluft erfolgen. Je größer das Integral ist, desto mehr Schwefelkomponenten wurden freigesetzt.

Im Vergleich zu der Probe aus Beispiel 6 (Vergleichsbeispiel) lag der Gehalt an Schwefelverbindungen in der Abluft bei den granulierten Produkten um eine Zehnerpotenz niedriger. Durch die Bewässerung der Granulate (z.B. durch Regen) wird die Freisetzung von Schwefelverbindungen allerdings erhöht, was durch Befeuchtung der Proben aus den Beispielen 1 und 2 (Ziffern 4 und 5 in Figur 2) simuliert wurde.

### Fließ -und Lagerverhalten der hergestellten Granulate (vgl. Tabelle 3, Figur 3)

Für die Bewertung der Lagerstabilität wurden die Granulate bei definierten Klimabedingungen (Temperatur und Feuchte) über eine gewisse Zeit gelagert. Ein Vergleich der Fließeigenschaften vor und nach der Lagerung gibt Aufschluss über die Lagerstabilität des Produktes.

Zur Messung der Fließeigenschaften wurden sogenannte Schergeräte benutzt (nach ASTM Standards D6128 "Standard Shear Testing Method for Bulk solids using the Jenike Shear Cell"). Die Schüttgutprobe wurde zur Messung in eine Scherzelle eingefüllt. Die Scherzelle bestand aus einem unten geschlossenen Bodenring, einem darüber liegenden "oberen Ring" gleichen Durchmessers sowie einem Deckel. Der Deckel wurde zentrisch mit einer z.B. 6 m Silo entsprechenden Last beaufschlagt. Durch das Verschieben des oberen Ringes und des Deckels gegenüber dem Bodenring wurde die Schüttgutprobe einer Scherverformung unterworfen. Die zum Verschieben notwendige Kraft wurde gemessen. Aus der Normalkraft und der Scherkraft wurden durch Division durch die Querschnittsfläche A der Scherzelle die Normalspannung (Anscherspannung, Fließort) und die Schubspannung σt berechnet. Die jeweils in die Scherzelle eingefüllte Schüttgutprobe wurde bei verschiedenen Normalspannungen, die durch Auflegen einer bestimmten Normalkraft eingestellt wurde, geschert. Die größte Hauptspannung beim stationären Fließen σ1 (= Verfestigungsspannung) ergab sich aus dem Spannungskreis, der den Fließort tangiert und durch den Anscherpunkt verläuft. Die Schüttgutfestigkeit (Druckfestigkeit) σc ergab sich aus dem Spannungskreis, der den Fließort tangiert und dessen kleinste Hauptspannung gleich Null ist. Im Gegensatz zum einachsigen Druckversuch erhielt man die Schüttgutfestigkeit bei der Messung mit Schergeräten nicht direkt, sondern über den Umweg des Fließortes. Die Schüttgutdichte pb wurde dadurch erhalten, dass man die Masse des Schüttgutes in der Scherzelle durch das Volumen der Scherzelle dividierte (Quelle: Dietmar Schulze, Pulver und Schüttgüter - Fließeigenschaften und Handhabung (Grundlagen), Springer-Verlag, 3. Auflage, 2014).

**Tabelle 3: Fließ -und Lagerverhalten der erzeugten Granulate**

| **Fließeigenschaften** | **Fließort** | **Verfestigungsspannung** | **Druckfestigkeit** | **Schüttgutdichte** | **Produkt** |
|---|---|---|---|---|---|
| Momentanfließverhalten | Anscherspannung | σ1 | σc | ρb | **aus Beispiel** |
| | Pa | Pa | Pa | kq/m³ | |
| | 2900 | 7965 | 471 | 709 | Beispiel 2 |
| | **2900** | **9767** | **734** | **738** | **Beispiel 5** |
| | | | | | |

| **Zeitverfestigung** | **Auflast** | **Lagerbedingungen** | **Druckfestigkeit** | **Schüttgutdichte** | **Produkt** |
|---|---|---|---|---|---|
| bei Anscherspannung 2900 Pa | kg | - | σc | ρb | **aus µ Beispiel** |
| Lagerzeit 24 h | 7 | 20 °C, 40 % rh | 24912 | 729 | **Beispiel** 2 |
| | **7** | **20 °C, 40 % rh** | **4077** | **714** | **Beispiel 5** |
| Lagerzeit 24 h | 7 | 50 °C, 7 kg | 10413 | 694 | Beispiel 2 |
| | **7** | **50 °C, 7 kg** | **3764** | **693** | **Beispiel 5** |
| | 6 | 50 °C, 6 kg | 18763 | 741 | Beispiel 2 |
| | **6** | **50 °C, 6 kg** | **3444** | **712** | **Beispiel 5** |
| Lagerzeit 24 h | 7 | 40 °C, 75 % rh | 21493 | 753 | Beispiel 2 |
| | **7** | **40 °C, 75** % **rh** | **16743** | **801** | **Beispiel 5** |
| | | | | | |

| - | **h** | **Lagerbedingungen** | **Pa** | **kg/m³** | |
|---|---|---|---|---|---|
| Variation Lagerzeit | 0 | 20 °C, 40 % rh | 471 | 709 | Beispiel 2 |
| | 24 | 20 °C, 40 % rh | 8184 | 711 | Beispiel 2 |
| | 72 | 20 °C, 40 % rh | 13303 | 723 | Beispiel 2 |
| | 168 | 20 °C, 40 % rh | 47797 | 708 | Beispiel 2 |
| Variation Lagerzeit | **0** | **20 °C, 40 % rh** | **734** | **738** | **Beispiel 5** |
| | **24** | **20 °C**, **40 % rh** | **3444** | **712** | **Beispiel 5** |
| | **72** | **20 °C, 40 % rh** | **6929** | **722** | **Beispiel 5** |
| Auflast 6 kq | **168** | **20 °C, 40 % rh** | **9780** | **738** | **Beispiel 5** |

| | | | | | |
|---|---|---|---|---|---|
| rh = relative Feuchtigkeit σ1 = maximale Verfestigungspannung σc = Druckfestigkeit (= Bruchspannung) ρb = Schüttgutdichte | | | | | |

Die Druckfestigkeit ist dabei ein Maß für die Schüttgutfestigkeit bzw. Verklumpungsneigung. Je höher die Werte der Druckfestigkeit liegen, desto größer sind die inneren Haftungskräfte bzw. umso größer ist die Verklumpung des Schüttgutes. Die Ergebnisse in Tabelle 3 bzw. in Figur 3 zeigen, dass das vor der Sprühgranulation zusätzlich mit Schwefelsäure pH-justierte Produkt (Beispiel 5) noch weniger Verklumpung auch nach Bewitterung in der Klimakammer bei 20°C und 40% relativer Luftfeuchtigkeit für bis zu 168 h sowie bei extremen Bewitterungsbedingungen (40% und 75% rh) eine bessere Lagerstabilität aufweist als das ohne vorherige Einstellung des pH auf den Wert 3 bis 6 mittels Schwefelsäure hergestellte Granulat (Beispiel 2).

## Patentansprüche

1. Verfahren zur Herstellung einer Methionin, Methionylmethionin, Kaliumsalz und Ammoniumsulfat enthaltenden, partikelförmigen Zusammensetzung, umfassend die folgenden Schritte:
(a) Bereitstellung einer wässrigen Mischung, enthaltend
0,5 bis 4 Gew.% Methionin,
0,5 bis 5 Gew.% Methionylmethionin,
1 bis 9 Gew.% Kalium in Form von Kaliumsalz und
7 bis 35 Gew.% Ammoniumsulfat,
(b) Erzeugung von Partikeln aus der in Schritt (a) bereitgestellten wässrigen Mischung durch ein formgebendes Verfahren unter vorgeschaltetem und/oder gleichzeitigem Verdampfen des Wassers,
(c) Trocknung der in Schritt (b) erhaltenen Partikel.

2. Verfahren nach Anspruch 1, bei welchem die wässrige Mischung in Schritt (a)
1 bis 3 Gew.% Methionin,
1 bis 4 Gew.% Methionylmethionin,
2 bis 7 Gew.% Kalium in Form von Kaliumsalz und/oder
10 bis 30 Gew.% Ammoniumsulfat enthält.

3. Verfahren nach Anspruch 1 oder 2, bei welchem die wässrige Mischung in Schritt (a) durch Vermischen einer wässrigen Lösung (i), enthaltend
30 bis 40 Gew.% Ammoniumsulfat
mit einer wässrigen Lösung (ii), enthaltend
2 bis 6 Gew.% Methionin,
4 bis 8 Gew.% Methionylmethionin und
6 bis 14 Gew.% Kalium in Form von Kaliumsalz
in einem Verhältnis der wässrigen Lösung (ii) zur wässrigen Lösung (i) von 1,0/0,5 bis 1,0/3,0 hergestellt wird.

4. Verfahren nach Anspruch 3, bei welchem die wässrige Lösung (i)
30 bis 40 Gew.% Ammoniumsulfat
und die wässrige Lösung (ii),
3 bis 5 Gew.% Methionin,
5 bis 7 Gew.% Methionylmethionin und/oder
8 bis 12 Gew.% Kalium in Form von Kaliumsalz enthält.

5. Verfahren nach Anspruch 3 oder 4, ferner umfassend den Schritt der Herstellung der Ammoniumsulfat enthaltenden, wässrigen Lösung (i) im Wesentlichen durch Behandeln eines bei der Herstellung von Blausäure aus Methan und Ammoniak anfallenden, Blausäure und Ammoniak enthaltenden Gasgemisches mit Schwefelsäure und anschließender Neutralisation der erhaltenen wässrigen Lösung mit Ammoniak.

6. Verfahren nach Anspruch 3 oder 4, ferner umfassend den Schritt der Herstellung der wässrigen Lösung (ii) durch Abtrennung von einer bei der Umsetzung von 5-(2-Methylmercaptoethyl)-hydantoin mit Kaliumcarbonat, Kaliumhydrogencarbonat und Kohlendioxid unter Bildung von Methionin entstehenden Mutterlauge.

7. Verfahren nach einem der Ansprüche 1 bis 6, bei welchem die wässrige Mischung in Schritt (a) zusätzlich mit Schwefelsäure versetzt wird bis dass ein pH-Wert von 3 bis 6 in der wässrigen Mischung in Schritt (a) erreicht ist, gemessen bei Raumtemperatur mit einer Glas-pH-Elektrode mit Flüssig-Elektrolyt-Füllung in Form einer 3-molaren KCl-Lösung.

8. Verfahren nach einem der Ansprüche 1 bis 7, bei welchem ferner die in Schritt (a) bereitgestellte wässrige Mischung vor Schritt (b) durch Verdampfen des Wassers zu einer wässrigen Suspension mit bis zu 70 Gew.% Feststoffgehalt aufkonzentriert wird.

9. Verfahren nach einem der Ansprüche 1 bis 8, bei welchem auf die in Schritt (b) erhaltenen Partikel durch Besprühen mit einer wässrigen Lösung enthaltend 30 bis 40 Gew.% Ammoniumsulfat unter gleichzeitigem Verdampfen des Wassers eine Ammoniumsulfat-Hüllschicht aufgebracht wird, wobei der Anteil der auf den Partikeln gebildeten Ammoniumsulfat-Hüllschicht 5 bis 30 Gew.% bezogen auf den Gesamtfeststoffgehalt der Partikel beträgt.

10. Verfahren nach einem der Ansprüche 1 bis 9, wobei das Kaliumsalz als mindestens ein Salz einer anorganischen oder organischen Säure vorliegt.

11. Verfahren nach Anspruch 10, **dadurch gekennzeichnet, dass** es sich beim Kaliumsalz um mindestens ein Kaliumsalz ausgewählt aus der Gruppe umfassend Ameisensäure, Essigsäure, Propansäure, 2-Hydroxypropansäure, 2-Hydroxy-4-methylthiobutansäure,KHCOs, K₂CO₃, KHSO₄ und K₂SO₄ handelt.

12. Verfahren nach einem der Ansprüche 1 bis 11, bei welchem das formgebende Verfahren in Schritt (b) als Sprühgranulation, Mischgranulation, Extrusion oder Kompaktierung ausgeführt wird.

13. Verfahren nach Anspruch 12, bei welchem das formgebende Verfahren in Schritt (b) als Sprühgranulation ausgeführt wird unter Verwendung einer Zweistoffdüse, bei der eine Gaskomponente zusammen mit der wässrigen Ausgangsmischung aus Schritt a) als Flüssigkomponente über die Düse gesprüht wird.

14. Verfahren nach Anspruch 13, **dadurch gekennzeichnet dass** Luft oder Stickstoff als Gaskomponente verwendet werden.

15. Verfahren nach Anspruch 13 oder 14, **dadurch gekennzeichnet dass** das Verfahren in einer Wirbelschicht bei einer Temperatur in der Wirbelschicht von 60 bis 130°C durchgeführt wird.

16. Partikelförmige Zusammensetzung, enthaltend
1,5 bis 10 Gew.% Methionin,
2,5 bis 9 Gew.% Methionylmethionin,
4 bis 20 Gew.% Kalium in Form von Kaliumsalz und
27 bis 80 Gew.% Ammoniumsulfat.

17. Zusammensetzung nach Anspruch 16, enthaltend
2 bis 8 Gew.% Methionin,
3 bis 7 Gew.% Methionylmethionin,
5 bis 17 Gew.% Kalium in Form von Kaliumsalz und/oder
30 bis 76 Gew.% Ammoniumsulfat.

18. Zusammensetzung nach Anspruch 16 oder 17, **dadurch gekennzeichnet, dass** es sich beim Kaliumsalz um mindestens ein Kaliumsalz ausgewählt aus der Gruppe umfassend Ameisensäure, Essigsäure, Propansäure, 2-Hydroxypropansäure, 2-Hydroxy-4-methylthiobutansäure, KHCO₃, K₂CO₃, KHSO₄ und K₂SO₄ handelt.

19. Zusammensetzung nach einem der Ansprüche 16 bis 18, ferner enthaltend ein Bindemittel, ausgewählt aus der Gruppe poröses vulkanisches Silicatgestein, gefällte oder pyrogene Kieselsäuren, poröses Karbonatgestein.

20. Zusammensetzung nach einem der Ansprüche 16 bis 19, bei welchem die Partikel mit einer Ammoniumsulfat-Schicht umhüllt sind, wobei der Anteil Ammoniumsulfat-Schicht 5 bis 30 Gew.% bezogen auf den Gesamtfeststoffgehalt der Partikel beträgt.

21. Verwendung der Zusammensetzung gemäß einem der Ansprüche 16 bis 20 als Düngemittel oder Düngemittelzusatz.

## Claims

1. Process for producing a particulate composition containing methionine, methionylmethionine, potassium salt and ammonium sulphate, comprising the following steps:
(a) providing an aqueous mixture containing
0.5 to 4% by weight methionine,
0.5 to 5% by weight methionylmethionine,
1 to 9% by weight potassium in the form of potassium salt and
7 to 35% by weight ammonium sulphate,
(b) generating particles from the aqueous mixture provided in step (a) by a forming process with upstream and/or simultaneous evaporation of the water,
(c) drying the particles obtained in step (b).

2. Process according to Claim 1, in which the aqueous mixture in step (a) contains
1 to 3% by weight methionine,
1 to 4% by weight methionylmethionine,
2 to 7% by weight potassium in the form of potassium salt and/or
10 to 30% by weight ammonium sulphate.

3. Process according to Claim 1 or 2, in which the aqueous mixture in step (a) is produced by mixing an aqueous solution (i) containing
30 to 40% by weight ammonium sulphate with an aqueous solution (ii) containing
2 to 6% by weight methionine,
4 to 8% by weight methionylmethionine and
6 to 14% by weight potassium in the form of potassium salt
in a ratio of the aqueous solution (ii) to the aqueous solution (i) of from
1.0/0.5 to 1.0/3.0.

4. Process according to Claim 3, in which the aqueous solution (i) contains
30 to 40% by weight ammonium sulphate and the aqueous solution (ii) contains
3 to 5% by weight methionine,
5 to 7% by weight methionylmethionine and/or
8 to 12% by weight potassium in the form of potassium salt.

5. Process according to Claim 3 or 4, further comprising the step of preparing the aqueous solution (i) containing ammonium sulphate primarily by treating a gaseous mixture containing hydrogen cyanide and ammonia, generated in the preparation of hydrogen cyanide from methane and ammonia, with sulphuric acid and subsequent neutralization of the resulting aqueous solution with ammonia.

6. Process according to Claim 3 or 4, further comprising the step of preparing the aqueous solution (ii) by separating a mother liquor formed in the reaction of 5-(2-methylmercaptoethyl)hydantoin with potassium carbonate, potassium hydrogen carbonate and carbon dioxide to give methionine.

7. Process according to any of Claims 1 to 6, in which the aqueous mixture in step (a) is additionally treated with sulphuric acid until a pH of 3 to 6 is reached in the aqueous mixture in step (a), measured at room temperature with a glass pH electrode filled with liquid electrolyte in the form of a 3 molar KCl solution.

8. Process according to any of Claims 1 to 7, in which the aqueous mixture provided in step (a) is also concentrated prior to step (b) by evaporation of water to give an aqueous suspension with a solids content of up to 70% by weight.

9. Process according to any of Claims 1 to 8, in which an ammonium sulphate shell layer is applied to the particles obtained in step (b) by spraying with an aqueous solution containing 30 to 40% by weight ammonium sulphate with simultaneous evaporation of water, wherein the proportion of the ammonium sulphate shell layer formed on the particles is 5 to 30% by weight based on the total solids content of the particles.

10. Process according to any of Claims 1 to 9, wherein the potassium salt is present as at least one salt of an inorganic or organic acid.

11. Process according to Claim 10, **characterized in that** the potassium salt takes the form of at least one potassium salt selected from the group comprising formic acid, acetic acid, propanoic acid, 2-hydroxypropanoic acid, 2-hydroxy-4-methylthiobutanoic acid, KHCO₃, K₂CO₃, KHSO₄ and K₂SO₄.

12. Process according to any of Claims 1 to 11, in which the forming process in step (b) is carried out as a spray granulation, mix granulation, extrusion or compaction.

13. Process according to Claim 12, in which the forming process in step (b) is carried out as a spray granulation with the use of a two-phase nozzle, in which a gas component together with the aqueous starting mixture from step a) is sprayed as a liquid component via the nozzle.

14. Process according to Claim 13, **characterized in that** air or nitrogen are used as a gas component.

15. Process according to Claim 13 or 14, **characterized in that** the process is carried out in a fluidized bed at a temperature in the fluidized bed of 60 to 130 °C.

16. Particulate composition containing
1.5 to 10% by weight methionine,
2.5 to 9% by weight methionylmethionine,
4 to 20% by weight potassium in the form of potassium salt and
27 to 80% by weight ammonium sulphate.

17. Composition according to Claim 16, containing
2 to 8% by weight methionine,
3 to 7% by weight methionylmethionine,
5 to 17% by weight potassium in the form of potassium salt and/or
30 to 76% by weight ammonium sulphate.

18. Composition according to Claim 16 or 17, **characterized in that** the potassium salt takes the form of at least one potassium salt selected from the group comprising formic acid, acetic acid, propanoic acid, 2-hydroxypropanoic acid, 2-hydroxy-4-methylthiobutanoic acid, KHCO₃, K₂CO₃, KHSO₄ and K₂SO₄.

19. Composition according to any of Claims 16 to 18, further comprising a binder selected from the group of porous volcanic silicate rock, precipitated or fumed silicas, porous carbonate rock.

20. Composition according to any of Claims 16 to 19, in which the particles have been coated with an ammonium sulphate layer, wherein the proportion of ammonium sulphate layer is 5 to 30% by weight, based on the total solids content of the particles.

21. Use of the composition according to any of Claims 16 to 20 as fertilizer or fertilizer additive.

## Revendications

1. Procédé pour la préparation d'une composition particulaire contenant de la méthionine, de la méthionylméthionine, un sel de potassium et du sulfate d'ammonium, comprenant les étapes suivantes :
(a) mise à disposition d'un mélange aqueux, contenant
0,5 à 4 % en poids de méthionine,
0,5 à 5 % en poids de méthionylméthionine,
1 à 9 % en poids de potassium sous forme de sel de potassium et
7 à 35 % en poids de sulfate d'ammonium,
(b) production de particules à partir du mélange aqueux mis à disposition dans l'étape (a) par un procédé de façonnage sous évaporation en amont et/ou simultanée de l'eau,
(c) séchage des particules obtenues dans l'étape (b) .

2. Procédé selon la revendication 1, dans lequel le mélange aqueux dans l'étape (a) contient
1 à 3 % en poids de méthionine,
1 à 4 % en poids de méthionylméthionine,
2 à 7 % en poids de potassium sous forme de sel de potassium et/ou
10 à 30 % en poids de sulfate d'ammonium.

3. Procédé selon la revendication 1 ou 2, dans lequel le mélange aqueux dans l'étape (a) est préparé par mélange d'une solution aqueuse (i), contenant
30 à 40 % en poids de sulfate d'ammonium
avec une solution aqueuse (ii), contenant
2 à 6 % en poids de méthionine,
4 à 8 % de méthionylméthionine et
6 à 14 % en poids de potassium sous forme de sel de potassium
en un rapport de la solution aqueuse (ii) à la solution aqueuse (i) de 1,0/0,5 à 1,0/3,0.

4. Procédé selon la revendication 3 dans lequel la solution aqueuse (i) contient
30 à 40 % en poids de sulfate d'ammonium
et la solution aqueuse (ii) contient,
3 à 5 % en poids de méthionine,
5 à 7 % en poids de méthionylméthionine et/ou
8 à 12 % en poids de potassium sous forme de sel de potassium.

5. Procédé selon la revendication 3 ou 4, comprenant en outre l'étape de préparation de la solution aqueuse (i) contenant du sulfate d'ammonium essentiellement par traitement d'un mélange de gaz, contenant de l'ammoniac et de l'acide cyanhydrique produit lors de la préparation d'acide cyanhydrique à partir de méthane et d'ammoniac, avec de l'acide sulfurique et ensuite neutralisation de la solution aqueuse obtenue avec de l'ammoniac.

6. Procédé selon la revendication 3 ou 4, comprenant en outre l'étape de préparation de la solution aqueuse (ii) par séparation d'une liqueur mère produite par la transformation de 5-(2-méthylmercaptoéthyl)-hydanthoïne avec du carbonate de potassium, de l'hydrogénocarbonate de potassium et du dioxyde de carbone avec formation de méthionine.

7. Procédé selon l'une quelconque des revendications 1 à 6, dans lequel le mélange aqueux dans l'étape (a) est de plus mis à réagir avec de l'acide sulfurique jusqu'à ce qu'une valeur de pH de 3 à 6 soit atteinte dans le mélange aqueux dans l'étape (a), mesurée à température ambiante avec une électrode de pH en verre dotée d'une charge d'électrolyte liquide sous forme d'une solution 3 molaire en KCl.

8. Procédé selon l'une quelconque des revendications 1 à 7, dans lequel en outre le mélange aqueux mis à disposition dans l'étape (a) est concentré par évaporation de l'eau en une suspension aqueuse comportant jusqu'à 70 % en poids de teneur en solides.

9. Procédé selon l'une quelconque des revendications 1 à 8, dans lequel une couche d'enveloppe de sulfate d'ammonium est déposée sur les particules obtenues dans l'étape (b) par pulvérisation avec une solution aqueuse contenant 30 à 40 % en poids de sulfate d'ammonium avec évaporation simultanée de l'eau, la proportion de la couche d'enveloppe de sulfate d'ammonium formée sur les particules étant de 5 à 30 % en poids par rapport à la teneur totale aux solides.

10. Procédé selon l'une quelconque des revendications 1 à 9, le sel de potassium étant présent en tant qu'au moins un sel d'un acide inorganique ou organique.

11. Procédé selon la revendication 10, **caractérisé en ce que** le sel de potassium est au moins un sel de potassium choisi dans le groupe comprenant l'acide formique, l'acide acétique, l'acide propanoïque, l'acide 2-hydroxypropanoïque, l'acide 2-hydroxy-4-méthylthiobutyrique, KHCO₃, K₂CO₃, KHSO₄ et K₂SO₄.

12. Procédé selon l'une quelconque des revendications 1 à 11, dans lequel le procédé de façonnage dans l'étape (b) est réalisé par granulation par pulvérisation, par granulation en mélange, par extrusion ou par compactage.

13. Procédé selon la revendication 12, dans lequel le procédé de façonnage dans l'étape (b) est réalisé par granulation par pulvérisation avec utilisation d'une buse binaire, dans laquelle un composant gazeux est pulvérisé ensemble avec le mélange de départ aqueux de l'étape a) en tant que composant le liquide par l'intermédiaire de la buse.

14. Procédé selon la revendication 13, **caractérisé en ce que** de l'air ou de l'azote est utilisé en tant que composant gazeux.

15. Procédé selon la revendication 13 ou 14, **caractérisé en ce que** le procédé est mis en œuvre dans un lit fluidisé à une température dans le lit fluidisé de 60 à 130 °C.

16. Composition particulaire, contenant
1,5 à 10 % en poids de méthionine,
2,5 à 9 % en poids de méthionylméthionine,
4 à 20 % en poids de potassium sous forme de sel de potassium et
27 à 80 % en poids de sulfate d'ammonium.

17. Composition selon la revendication 16, contenant
2 à 8 % en poids de méthionine,
3 à 7 % en poids de méthionylméthionine,
5 à 17 % en poids de potassium sous forme de sel de potassium et/ou
30 à 76 % en poids de sulfate d'ammonium.

18. Composition selon la revendication 16 ou 17, **caractérisée en ce que** le sel de potassium est au moins un sel de potassium choisi dans le groupe comprenant l'acide formique, l'acide acétique, l'acide propanoïque, l'acide 2-hydroxypropanoïque, l'acide 2-hydroxy-4-méthylthiobutyrique, KHCO₃, K₂CO₃, KHSO₄ et K₂SO₄.

19. Composition selon l'une quelconque des revendications 16 à 18, contenant en outre un liant, choisi dans le groupe d'une roche silicatée volcanique poreuse, des silices précipitées ou pyrogénées, d'une roche carbonatée poreuse.

20. Composition selon l'une quelconque des revendications 16 à 19, dans laquelle les particules sont enveloppées par une couche de sulfate d'ammonium, la proportion de la couche de sulfate d'ammonium étant de 5 à 30 % en poids par rapport à la teneur totale en solides des particules.

21. Utilisation de la composition selon l'une quelconque des revendications 16 à 20 en tant qu'engrais ou additif d'engrais.
